# EUROPEAN PATENT SPECIFICATION

(11) **EP 4 219 996 B1**
(45) Date of publication and mention of the grant of the patent: **20.11.2024**
(21) Application number: 22209936.8
(22) Date of filing: 28.11.2022
(51) Int. Cl.: F16L 33/22

(54) **MECHANICAL TIGHTENING FOR SMOOTH SURFACE COMPOSITE PIPES**
MECHANISCHE KLEMMUNG FÜR GLATTFLÄCHIGE VERBUNDROHRE
SERRAGE MÉCANIQUE POUR TUYAUX COMPOSITES À SURFACE LISSE

(30) Priority: 31.01.2022 IT 202200001610
(43) Date of publication of application: 02.08.2023
(73) Proprietor: BARBERI RUBINETTERIE INDUSTRIALI S.r.l., 13018 Valuduggia (VC) (IT)
(72) Inventor: MASTROMATTEO, Ciro, 36043 Camisano Vicentino (VI) (IT)
(74) Representative: Tansini, Elio Fabrizio

(56) References cited:
- EP-A1- 2 921 756
- CA-C- 2 153 634
- GB-A- 2 121 133

## Description

### Field of the invention

The present invention generally relates to the technical field of fittings for pipes, and it particularly relates to a screw fitting for the mutual joining of a threaded terminal element and a smooth surface pipe.

### State of the Art

As known. There are various types of fittings for joining a smooth surface pipe to a metal terminal element.

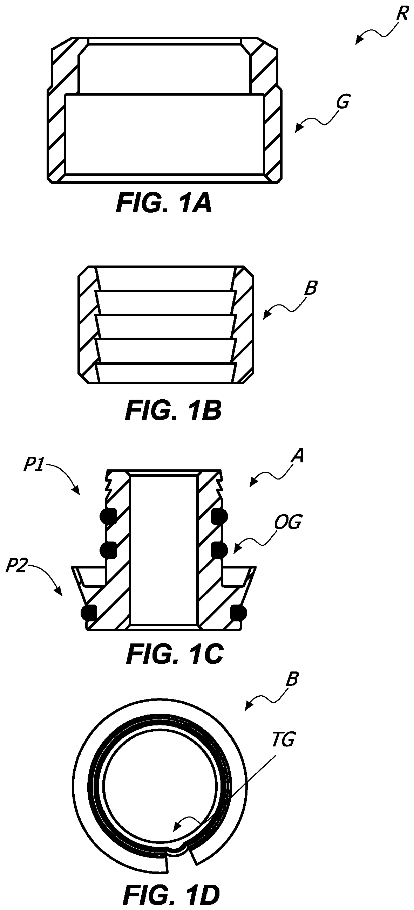

In particular, as visible in **FIGS. 1A** to **1D****,** there is known a fitting **R** which includes a tubular metal core **A** having a front portion **P2** which can be coupled to the threaded terminal element and a rear portion **P1** which can be inserted into the pipe. O-rings **OG** are fitted on the metal core **A** in order to ensure the hydraulic sealing.

Furthermore, there may be provided for a ring nut **G** interacting with an elastic sleeve **B** having a cross-sectional cut **TG,** for radially compressing the pipe on the rear portion **P1** of the metal core **A.**

A uniform radial compression in the axial direction of the sleeve **B** corresponds to the screwing of the ring nut **G** on the threaded terminal element and, as a result, a corresponding radial compression of the pipe on the rear portion **P1** of the metal core **A.**

However, screwing the ring nut requires exerting significant screwing forces due to the opposite surfaces, which create a rather high friction.

Furthermore, the cross-sectional cut **TG** present on the sleeve **B** constrains the pipe which, when compressed, swells therein.

As a result, the rotation of the ring nut **G** and the resulting rotation and radial compression of the sleeve **B** on the pipe, drive the latter in torsion with ensuing weakening of the mechanical structure thereof. Further fittings of the prior art are known from documents GB 2 121 133 A, CA 2 153 634 C and EP 2 921 756 A1. In particular GB 2 121 133 A discloses a fitting for the mutual junction of a threaded terminal element and a smooth surface pipe having one end, comprising a tubular core, a ring nut, an elastic sleeve, and an elastomeric gasket.

### Summary of the invention

An object of the present invention is to at least partly overcome the aforementioned drawbacks, by providing a fitting that is highly functional, easy to manufacture and/or cost-effective.

Another object of the invention is to provide a fitting that requires minimum screwing forces.

A further object of the invention is to provide a fitting which allows a high mechanical and/or hydraulic sealing over time.

Another object of the invention is to provide a robust and reliable fitting.

A further object of the invention is to provide a fitting which ensures the wholeness of the pipe on which it is mounted.

These and other objects that will be more apparent hereinafter, are attained by a fitting having one or more of the characteristics described and/or claimed and/or illustrated herein.

Advantageous embodiments of the invention are defined according to the dependent claims.

### Brief description of the drawings

Further characteristics and advantages of the invention will be more apparent in the light of the detailed description of some preferred but non-exclusive embodiments of a fitting 1, shown by way of non-limiting example with reference to the attached drawings, wherein:
**FIGS. 1A, 1B, 1C** are front cross-sectional views of a ring nut **G,** a sleeve **B** and a core **A** of a fitting **R** of the prior art, regarding which **FIG. 1D** is a top view of a sleeve **B**;

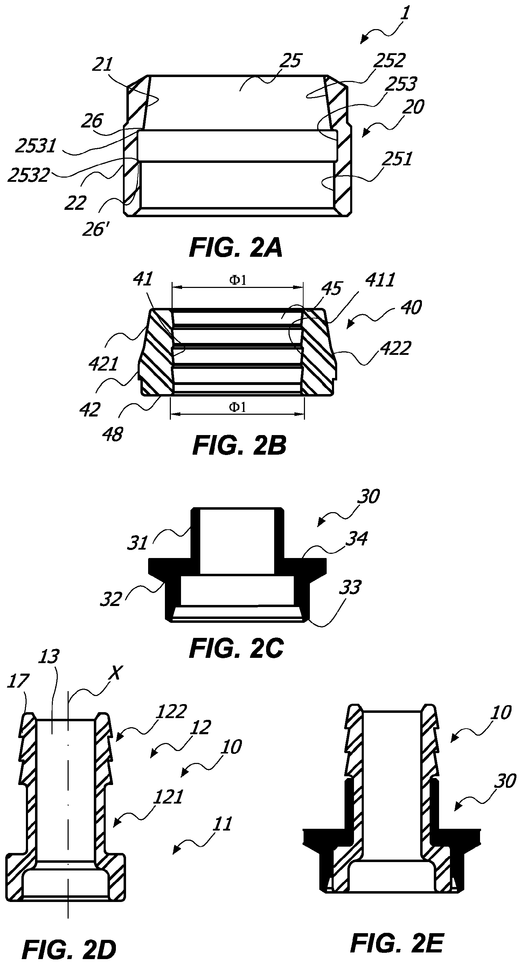

**FIGS. 2A, 2B, 2C, 2D** are cross-sectional views respectively of the ring **nut20,** of the sleeve **40,** of the gasket **30,** of the core **10** of the fitting **1** according to the invention, regarding which **FIG. 2E** is a front cross-sectional view of the gasket **30** fitted on the core **10;**

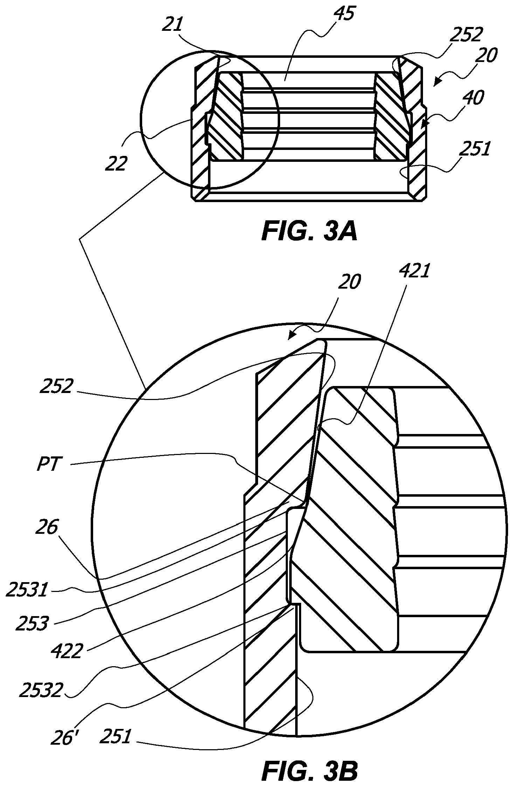

**FIG. 3A** is a front cross-sectional assembled view of the sleeve **40** and of the ring nut **20,** regarding which **FIG. 3B** is the view of an enlargement of a detail;

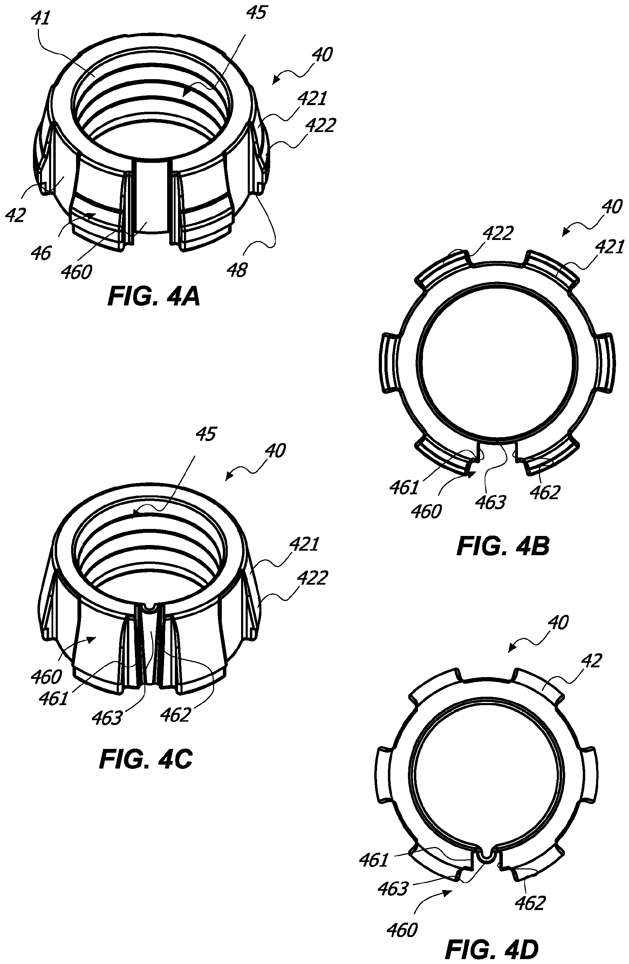

**FIGS. 4A** and **4B** are respectively axonometric and top views of the sleeve **40;**
**FIGS. 4C** and **4D** are respectively axonometric and top views of the sleeve **40** wherein the deformation area **46** is collapsed;
**FIGS. 5A, 5B** and **5C** are front cross-sectional views of the fitting **1** assembled on the pipe **P** in use;
**FIG. 6** is a front view of the fitting **1** assembled on the pipe **P** in use, after screwing.

### Detailed description of some preferred embodiments

With reference to the mentioned figures, herein described is a fitting **1** which can be used for the joining of a smooth surface pipe **P** and a threaded terminal element **T.**

In a per se known manner, the pipe **P** may be a multilayer pipe or a pipe made of rubber, plastic or a composite pipe, all of which are known in the industry.

Preferably, the fitting **1** may comprise a substantially tubular-shaped core **10** defining an axis **X.**

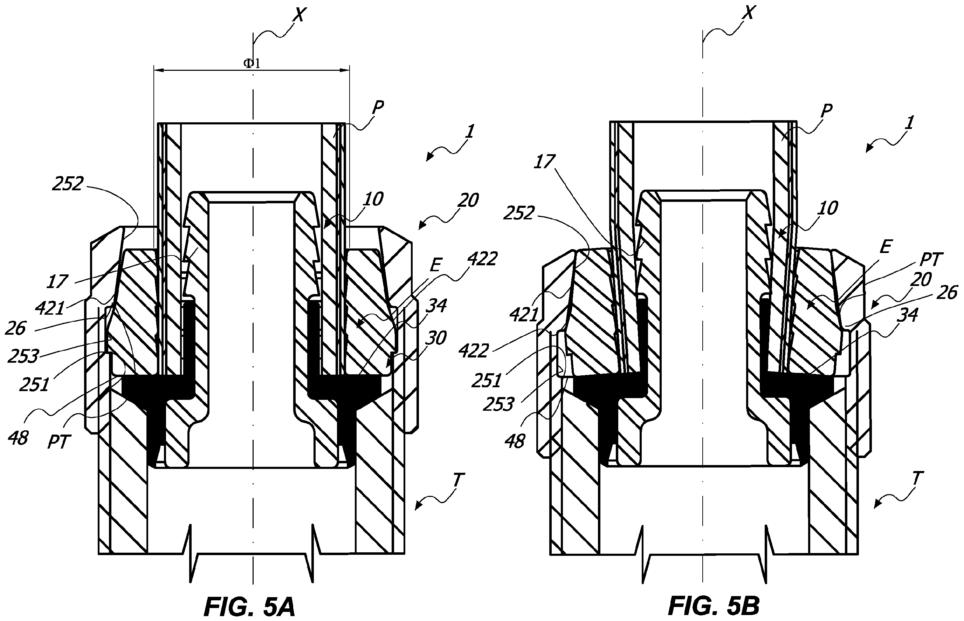

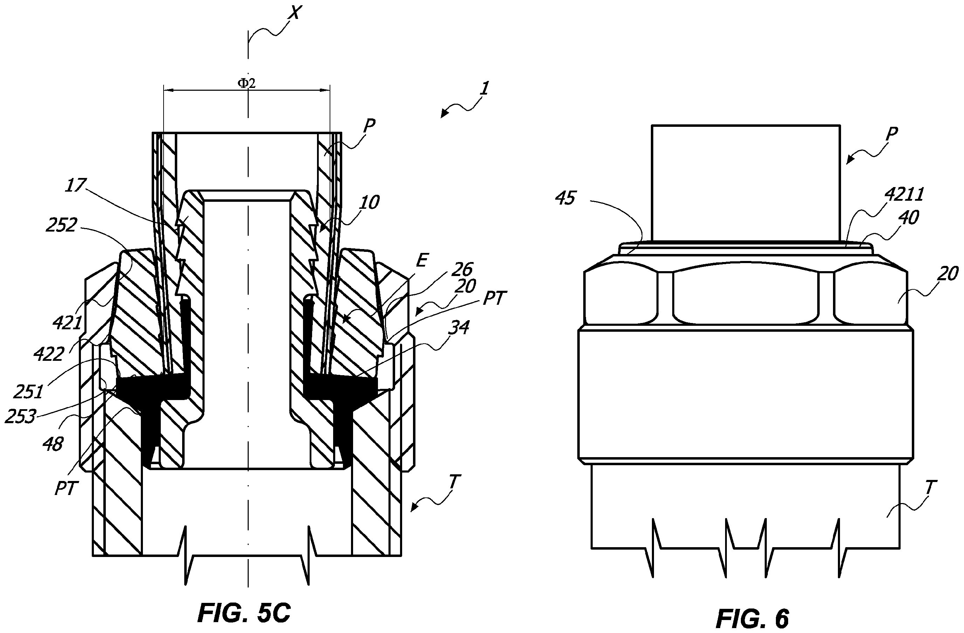

It is clear that all the elements that form the fitting **1** may be coaxial to the axis **X,** as particularly clear in **FIGS. 5A, 5B** and **5C****.**

In a per se known manner, the core **10** may include a through central hole **13.**

Preferably, the tubular core **10** may be made of polymeric or metal material.

For example, the core **10** may be made of GRILAMID^{®} or per se known similar materials and it may be obtained by moulding.

Specifically, the material used may have a greater hardness than the hardness of the pipe **P,** so as to ensure a robust mechanical sealing of the pipe.

The substantially cylindrical-shaped threaded terminal element **T** may have a rear portion designed to come into contact with the tubular core **10** or, in an alternative embodiment not shown in the figures in that known in the art, the tubular core **10** and the threaded terminal element **T** may be monolithic with respect to each other, that is made of a single piece.

The tubular core **10** may have a front portion **11** designed to be coupled with the threaded terminal element **T,** for example through a thread or bayonet coupling or a fitting, and a rear portion **12** designed to be introduced into the end **E** of the pipe **P** so as to come into contact with inner surface of the latter.

On the other hand, in the alternative embodiment outlined above, the front portion **11** of the tubular core **10** may be monolithic with the rear portion of the threaded terminal element **T.** In other words, the threaded terminal element **T** may include a rear elongated appendage consisting of the tubular core **10.**

Advantageously, the rear portion **12** of the tubular core **10** may include a first smooth area **121** and a second area **122** having a maximum diameter substantially greater than the diameter of the first smooth area **121.**

In particular, the second area **122** may comprise a plurality of teeth **17,** which may be made shaped like saw teeth.

Suitably, the fitting **1** may comprise a ring nut **20** which can be screwed on the threaded terminal element **T.**

The ring nut **20** may have an outer surface **22** which can be gripped by a user for screwing and an inner surface **21.**

In particular, the inner surface **21** may include an annular seat **25** with a threaded portion **251** for coupling with the terminal element **T,** an opposite frustoconical portion **252** and a portion **253** interposed between the two.

Specifically, the portion **253** may be cylindrical and it may be defined between two surfaces **2531** and **2532,** facing each other, spaced apart and perpendicular with respect to the axis **X.**

Even more specifically, the portion **253** may define a larger diameter with respect to the maximum diameter of the portions **251** and **252.**

Therefore, the portion **253** will define a groove inside the surface **21.**

As a result, between the surface **2531** and the portion **252** there may be defined a step **26.** At the same time, between the surface **2532** and the portion **251** there may be defined a further step **26'** facing the step **26.**

In particular, such step **26'** may act as a step for the sleeve **40**, which may be snap-inserted into the ring nut **20**, so as to mutually constrain them and facilitate the installation of the fitting **1**.

Suitably, the fitting **1** may comprise an elastic sleeve **40** made of polymeric material, for example nylon or a per se known similar material.

For example, the sleeve **40** may be obtained by moulding.

Preferably, the elastic sleeve **40** may have an inner surface **41** designed to come into contact with the outer surface of the pipe **P** and an outer surface **42**.

Advantageously, the inner surface **41** may define an annular seat **45** through which the pipe **P** may pass.

Therefore, such annular seat **45** may have a predetermined diameter **Ø1** suitable to be fitted into the pipe **P**.

In addition, the inner surface **41** thereof may include a plurality of annular ribs **411** so as to ensure the local mechanical sealing thereof on the outer surface of the pipe **P**.

Preferably, such annular ribs may be bevelled, so as to minimise friction upon screwing the ring nut **20** and the terminal element **T** so as to prevent the transfer of possible torsion stresses thereon, despite being wrapped around the pipe **P** so as to provide a mechanical sealing.

Advantageously, the outer surface **42** may include a portion **421** facing the portion **252** of the ring nut **20** and a consecutive portion **422** with respect to the first and which can be faced in succession to the portions **253** and **252** respectively before and after screwing the ring nut **20** and the threaded terminal element **T**.

Preferably, both portions **421** and **422** may be frusto-conical, that is they may be divergent outwards with respect to the axis **X**, where the divergence is defined in the direction opposite to the axial translation of the sleeve **40**.

Even more specifically, the portions **421** and **422** may define different angles of incidence with respect to the axis **X** so that the portion **422** is more flared with respect to the portion **421**.

However, it is clear that the portion **421** may not be frustoconical without departing from the scope of protection of the attached claims.

In addition, the portion **421** may include an edge area **4211** protruding from the seat **25** after screwing the ring nut **20** and threaded terminal element **T**, so as to monitor the correctness of the coupling, as well as to ensure the hydraulic and mechanical sealing of the fitting 1 as indicated below.

To this end, the portion **252** may have a greater height than the height of the portion **421**.

Advantageously, the sleeve **40** may include a surface **48** which can be faced to the terminal element **T**.

Furthermore, the sleeve **40** may comprise a plastically deformable area **46** which may collapse during the screwing of the ring nut **20** and of the terminal element **T.**

Specifically, the plastically deformable area **46** may include a groove **460** with a pair of longitudinal surfaces **461** and **462,** facing and parallel to the axis **X.**

On the other hand, the groove **460** may include a bottom surface **463** interposed between the surfaces **461** and **462** and concentric with the annular seat **45.**

Specifically, during the screwing between the ring nut **20** and the terminal element **T,** the surface **463** may collapse externally in the centrifuge direction with respect to the axis **X,** so as to be contained between the surfaces **461** and **462.**

Therefore, during the entire screwing the inner surface **41** may remain continuous and free of recesses, for example with dimensions such to constrain the pipe **P,** actually preventing the swelling of the latter in the groove **460** when it is compressed.

As a result, the inner surface **41** may slide, wrap around and compress the pipe **P** during the screwing of the ring nut **20** and terminal element **T,** without creating points which could constrain the pipe **P** and cause the torsion thereof.

Suitably, the fitting **1** may further comprise an elastomeric gasket **30,** for example made of NBR or similar materials, arranged peripherally with respect to the tubular core **10** and designed to remain interposed between the end **E** of the pipe **P,** the elastic sleeve **40** and the threaded terminal element **T** to provide the local hydraulic sealing.

In particular, the elastomeric gasket **30** may be fitted onto the tubular core **10.**

Advantageously, the gasket **30** may comprise a first tubular portion **31** coaxially coupled with the tubular core **10** at the smooth area **121** of the rear portion **12** thereof.

Furthermore, the elastomeric gasket **30** may suitably comprise a second flange-shaped portion **32** having a front face **33** susceptible to come into contact with the threaded terminal element **T** and a rear face **34** susceptible to act as an abutment both for the edge of the pipe **P** and for the edge **48** of the elastic sleeve **40.**

This may allow to increase the local hydraulic sealing.

From an application point of view, the sleeve **40** may be snap-inserted into the ring nut **20,** as described above, while the gasket **30** may be provided already assembled to the core **10.**

Therefore, the installation technician may only have two pieces to handle, therefore simplifying the installation of the fitting **1.**

However, it is clear that the gasket **30** and the core **10** may not be pre-assembled without departing from the scope of protection of the attached claims.

The screwing of the ring nut **20** onto the threaded terminal element **T** will cause the axial sliding of the sleeve **40** and a concomitant radial compression thereof.

Furthermore, the portion **422** will impact the step **26** in a single point of tangency **PT**, therefore preventing possible torsions of the sleeve **40**.

Specifically, the portion **422** will be free to rotate on the step **26**, so as not to transfer the twisting moment imparted by the ring nut **20** to the sleeve **40** when screwing onto the terminal element **T**.

Preferably, the impact between the portion **422** and the step **26** in a single point of tangency **PT,** may prevent possible torsions of the pipe **P** wrapped around by the sleeve **40**.

As shown in **FIGS. 5A** to **5C**, during the aforementioned screwing, the portion **422** will translate axially so as to be faced, after coupling, to the portion **252** of the ring nut **20**.

At the same time, such translation will cause a progressive and differentiated radial compression of the sleeve **40** along the axis **X**, which will therefore be subjected to a conical compression.

Specifically, such conical compression will be convergent with respect to the axis **X**, where the convergence is defined in the direction opposite to the axial translation of the sleeve **40**.

This means that after screwing, the sleeve **40** will have a diameter **Ø2** at the surface **48,** so as to allow the maximum mechanical sealing of the pipe **P.**

Specifically, the compression of the sleeve **40** will cause the ensuing maximum radial compression of the gasket **30** at the portion **31,** as well as the ensuing conical radial compression of the end **E** of the pipe **P.**

The radial compression of the sleeve **40** will be allowed by the elastic nature thereof, as well as by the presence of the aforementioned plastically deformable area **46.**

After screwing, the latter will actually have the surface **463** collapsed between the walls **461** and **462.**

In particular, such swelling may also be convergent toward the axis **X,** where the convergence is defined in the direction opposite to the axial translation of the sleeve **40.**

Furthermore, after screwing, the aforementioned edge area **4211** will protrude from the seat **25,** as indicated above.

At the same time, the axial translation of the portion **422** will cause an axial compression of the end **E** of the pipe **P** against the elastomeric gasket **30** so as to provide the aforementioned hydraulic sealing, in particular at the portion **34** thereof.

In the light of the above, it is clear that the fitting 1 attains the pre-established objects, in particular an excellent hydraulic and mechanical sealing.

## Claims

1. A fitting for the mutual joining of a threaded terminal element **(T)** and a smooth surface pipe **(P)** having one end **(E),** comprising:
- a tubular core **(10)** defining an axis **(X)** having a front portion **(11)** which can be coupled or monolithic with the threaded terminal element **(T)** and a rear portion **(12)** which can be inserted into the end **(E)** of the pipe **(P)** to come into contact with the internal surface thereof;
- a ring nut **(20)** which can be mutually screwed on said threaded terminal element **(T)** having an outer surface **(22)** designed to be gripped by a user and an inner surface **(21)** designed to be faced toward the pipe **(P),** said inner surface **(21)** including a first annular seat **(25)** with a first threaded portion **(251)** which can be coupled to the threaded terminal element **(T),** a second opposite substantially frustoconical portion **(252)** and a third portion **(253)** interposed
therebetween defining a first groove with a surface **(2531)** perpendicular to said axis **(X),** the latter and said second portion **(252)** defining a step **(26);**
- an elastic sleeve (**40**) which can be fitted on the pipe (**P**) having an inner surface (**41**) designed to come into contact with the outer surface of the pipe (**P**) with a second substantially continuous annular seat (**45**) having a first predefined diameter **(Ø1)**, an outer surface (**42**) with a third portion (**421**) facing said second portion (**252**) of said ring nut (**20**) and a fourth substantially frustoconical portion (**422**) mutually consecutive to the first, a front
surface **(48)** facing said threaded terminal element **(T)** and at least one plastically deformable area **(46)** with a second groove **(460)** parallel to said axis **(X);**
- an elastomeric gasket **(30)** arranged peripherally with respect to said tubular core **(10)** and designed to remain interposed between the end **(E)** of the pipe **(P),** said sleeve **(40)** and the threaded terminal element **(T)** to provide the local hydraulic sealing;
wherein upon reciprocal screwing said ring nut **(20)** and said threaded terminal element **(T),** said step **(26)** is designed to mutually impact said fourth portion **(422)** of said sleeve **(40)** in a single point of tangency **(PT),** the screwing causing the axial translation of said sleeve **(40)** and an ensuing radial compression thereof so that:
the end **(E)** of the pipe **(P)** is axially compressed against said elastomeric gasket **(30)** so as to provide the aforementioned hydraulic sealing; and
- said second annular seat **(45)** is progressively radially compressed along said axis **(X)** so as to radially compress the end **(E)** of the pipe **(P)** against said elastomeric gasket **(30)** so as to obtain a first mechanical sealing, the second annular seat **(45)** having - after screwing - a second predetermined diameter **(Ø2)** at said front surface **(48)** that is substantially smaller than said diameter (**Ø1**), said plastically deformable area **(46)** collapsing so that said inner surface **(41)** remains substantially continuous and free of recesses.

2. Fitting according to claim 1, wherein - upon the mutual screwing of said ring nut **(20)** and said threaded terminal element **(T)** said step **(26)** is designed to mutually impact said fourth portion **(422)** of said sleeve **(40)** in a single point of tangency **(PT)**so as to avoid unwanted torsions of the pipe **(P).**

3. Fitting according to claim 1 or 2, wherein said sleeve **(40)** is made of a first polymeric material.

4. Fitting according to one or more of the preceding claims, wherein said third portion **(421)** of said sleeve **(40)** is also frustoconical, said third portion **(421)** and said fourth portion **(422)** both being divergent with respect to said axis **(X).**

5. Fitting according to the preceding claim, wherein said third portion **(421)** and said fourth portion **(422)** have a different angle of incidence with respect to said axis **(X).**

6. Fitting according to claim 4 or 5, wherein after the mutual screwing of said ring nut **(20)** and said threaded terminal element **(T),** said substantially frustoconical second portion **(252)** of said ring nut **(20)** and said third portion **(421)** of said sleeve **(40)** are substantially parallel.

7. Fitting according to any one of the preceding claims, wherein said groove **(460)** comprises a pair of longitudinal surfaces **(461, 462)** facing each other and parallel to said axis **(X)** and a bottom surface **(463)** interposed between them and concentric with said annular seat **(45),** the bottom surface **(463)** being collapsible externally upon the mutual screwing of said ring nut **(20)** and said threaded terminal element **(T)** so as to remain laterally delimited by said pair of longitudinal surfaces **(461, 462)** so that said inner surface **(41)** remains substantially continuous and free of recesses.

8. Fitting according to any one of the preceding claims, wherein said tubular core **(10)** is made of a metal material or of a second polymeric material having a degree of hardness substantially greater than the degree of hardness of the pipe **(P).**

9. Fitting according to any one of the preceding claims, wherein said inner surface **(41)** of said sleeve **(40)** wraps around the pipe **(P)** without creating friction with the same upon the mutual rotation of said ring nut **(20)** and said threaded terminal element **(T),** the inner surface **(41)** of said sleeve **(40)** having a plurality of bevelled annular ribs **(411).**

10. Fitting according to any one of the preceding claims, wherein said elastomeric gasket **(30)** has a first tubular portion (31) coaxially coupled with said tubular core (10) and a flange-shaped second portion (32) having a front face (33) susceptible to come into contact with the threaded terminal element (T) and a rear face (34), said front surface (48) of said sleeve (40) mutually impacting the latter to axially compress it against said threaded terminal element (T) upon the mutual screwing with said ring nut (20), so as to obtain the aforementioned local hydraulic sealing, said rear face (34) further being susceptible to act as an abutment for the end (E) of the pipe (P).

11. Fitting according to any one of the preceding claims, wherein said third portion (421) of said sleeve (40) includes at least one area (4211) protruding from said first annular seat (25) of said ring nut (20) after the mutual screwing of said ring nut (20) and of the threaded terminal element (T), so as to signal the correct mutual connection.

## Patentansprüche

1. Ein Fitting zur Verbindung eines Gewindeanschlusselements **(T)** und eines glattflächigen Rohrs **(P),** das ein Ende **(E)** aufweist, miteinander, das Folgendes umfasst:
- einen rohrförmigen Kern **(10),** der eine Achse **(X)** definiert, der einen vorderen Abschnitt **(11),** der gekuppelt sein oder mit dem Gewindeanschlusselement **(T)** aus einem Stück bestehen kann, und einen rückseitigen Abschnitt **(12),** der in das Ende **(E)** des Rohrs **(P)** eingeführt werden kann, um mit dessen Innenfläche in Kontakt zu gelangen, aufweist;
- eine Ringmutter **(20),** die jeweils an dem genannten Gewindeanschlusselement **(T)** verschraubt werden kann und eine Außenfläche **(22)** aufweist, die darauf ausgelegt ist, von einem Benutzer gefasst zu werden, und eine Innenfläche **(21),** die darauf ausgelegt ist, zu dem Rohr **(P)** gerichtet zu sein, wobei die genannte Innenfläche **(21)** einen ersten ringförmigen Sitz **(25)** mit einem ersten Gewindeabschnitt **(251),** der mit dem Gewindeanschlusselement **(T)** gekuppelt werden kann, einen im Wesentlichen kegelstumpfförmigen gegenüberliegenden zweiten Abschnitt **(252)** und einen dazwischen eingefügten dritten Abschnitt **(253)** umfasst,
der eine erste Nut mit einer zu der genannten Achse **(X)** senkrechten Oberfläche **(2531)** definiert, wobei Letztere und der genannte zweite Abschnitt **252)** eine Stufe **(26)** definieren;
- eine elastische Hülse **(40),** die auf dem Rohr **(P)** montiert werden kann und eine Innenfläche **(41)** aufweist, die darauf ausgelegt ist, mit der Außenfläche des Rohrs **(P)** mit einem im Wesentlichen kontinuierlichen ringförmigen Sitz **(45)** in Kontakt zu gelangen, der einen ersten vorgegebenen Durchmesser (**Ø1**), eine Außenfläche **(42)** mit einem dritten Abschnitt **(421),** der zu dem genannten zweiten Abschnitt **(252)** der genannten Ringmutter **(20)** gerichtet ist, und einen im Wesentlichen kegelstumpfförmigen vierten Abschnitt **(422)** aufweist, jeweils auf den ersten folgend, eine vordere Fläche **(48),** die zu dem genannten Gewindeanschlusselement **(T)** gerichtet ist und mindestens einen plastisch verformbaren Bereich **(46)** mit einer zweiten Nut **(460)** parallel zu der genannten Achse **(X);**
- eine Elastomerdichtung (30), die im Verhältnis zu dem genannten rohrförmigen Kern **(10)** umlaufend angeordnet und darauf ausgelegt ist, zwischen dem Ende **(E)** des Rohrs **(P),** der genannten Hülse **(40)** und dem Gewindeanschlusselement **(T)** eingefügt zu bleiben, um für die lokale hydraulische Abdichtung zu sorgen;
wobei beim Verschrauben der genannten Ringmutter **(20)** und des genannten Gewindeanschlusselements **(T)** miteinander die genannte Stufe **(26)** darauf ausgelegt ist, jeweils den genannten vierten Abschnitt **(422)** der genannten Hülse **(40)** an einem einzigen Berührungspunkt **(PT)** zusammenzupressen, wobei das Verschrauben die axiale Verschiebung der genannten Hülse **(40)** und eine anschließende radiale Kompression derselben herbeiführt, so dass:
das Ende **(E)** des Rohrs **(P)** axial gegen die genannte Elastomerdichtung **(30)** komprimiert wird, um für die zuvor genannte hydraulische Abdichtung zu sorgen; und
- der genannte zweite ringförmige Sitz **(45)** nach und nach radial entlang der genannten Achse **(X)** komprimiert wird, um das Ende **(E)** des Rohrs **(P)** radial gegen die genannte Elastomerdichtung **(30)** zu komprimieren, um eine erste mechanische Abdichtung zu erhalten, wobei der zweite ringförmige Sitz **(45)** - nach dem Verschrauben - einen zweiten vorgegebenen Durchmesser (**Ø2**) an der genannten vorderen Fläche **(48)** aufweist, der im Wesentlichen kleiner als der genannte Durchmesser (**Ø1**) ist, wobei der plastisch verformbare Bereich **(46)** nachgibt, so dass die genannte Innenfläche **(41)** im Wesentlichen kontinuierlich und frei von Vertiefungen bleibt.

2. Fitting nach Anspruch 1, wobei - beim Verschrauben der genannten Ringmutter **(20)** und des genannten Gewindeanschlusselements **(T)** miteinander - die genannte Stufe **(26)** darauf ausgelegt ist, jeweils den genannten vierten Abschnitt **(422)** der genannten Hülse **(40)** an einem einzigen Berührungspunkt **(PT)** zusammenzuzupressen, um unerwünschte Torsionen des Rohrs **(P)** zu vermeiden.

3. Fitting nach Anspruch 1 oder 2, wobei die genannte Hülse **(40)** aus einem ersten Polymerwerkstoff hergestellt ist.

4. Fitting nach einem oder mehreren der vorangegangenen Ansprüche, wobei der genannte dritte Abschnitt **(421)** der genannten Hülse **(40)** außerdem kegelstumpfförmig ist, wobei der genannte dritte Abschnitt **(421)** und der genannte vierte Abschnitt **(422)** beide im Verhältnis zu der genannten Achse **(X)** divergent sind.

5. Fitting nach dem vorangegangenen Anspruch, wobei der genannte dritte Abschnitt **(421)** und der genannte vierte Abschnitt **(422)** im Verhältnis zu der genannten Achse **(X)** einen anderen Einfallswinkel aufweisen.

6. Fitting nach Anspruch 4 oder 5, wobei nach dem Verschrauben der genannten Ringmutter **(20)** und des genannten Gewindeanschlusselements **(T)** miteinander der genannte im Wesentlichen kegelstumpfförmige zweite Abschnitt **(252)** der genannten Ringmutter **(20)** und der genannte dritte Abschnitt **(421)** der genannten Hülse **(40)** im Wesentlichen parallel sind.

7. Fitting nach einem beliebigen der vorangegangenen Ansprüche, wobei die genannte Nut **(460)** ein Paar longitudinale Oberflächen **(461, 462)** umfasst, die zueinander gerichtet und parallel zu der genannten Achse **(X)** und einer zwischen ihnen eingefügten Bodenfläche **(463)** sind, die konzentrisch mit dem genannten ringförmigen Sitz **(45)** ist, wobei die Bodenfläche **(463)** beim Verschrauben der genannten Ringmutter **(20)** und des genannten Gewindeanschlusselements **(T)** miteinander nach außen nachgiebig ist, um seitlich von dem genannten Paar longitudinaler Oberflächen **(461, 462)** begrenzt zu bleiben, so dass die genannte Innenfläche **(41)** im Wesentlichen kontinuierlich und frei von Vertiefungen bleibt.

8. Fitting nach einem beliebigen der vorangegangenen Ansprüche, wobei der genannte rohrförmige Kern **(10)** aus einem Metallwerkstoff oder aus einem zweiten Polymerwerkstoff hergestellt ist, der einen Härtegrad aufweist, der im Wesentlichen größer als der Härtegrad des Rohrs **(P)** ist.

9. Fitting nach einem beliebigen der vorangegangenen Ansprüche, wobei die genannte Innenfläche **(41)** der genannten Hülse **(40)** das Rohr **(P)** umhüllt, ohne bei gegenseitiger Rotation der genannten Ringmutter **(20)** und des genannten Gewindeanschlusselements **(T)** Reibung zu erzeugen, wobei die Innenfläche **(41)** der genannten Hülse **(40)** eine Vielzahl von abgeschrägten, ringförmigen Rippen **(411)** aufweist.

10. Fitting nach einem beliebigen der vorangegangenen Ansprüche, wobei die genannte Elastomerdichtung **(30)** einen mit dem genannten rohrförmigen Kern **(10)** koaxial gekuppelten ersten rohrförmigen Abschnitt **(31)** und einen flanschförmigen zweiten Abschnitt **(32)** aufweist, der eine Vorderseite **(33)** aufweist, die geeignet ist, mit dem genannten Gewindeanschlusselements **(T)** und einer rückseitige Fläche **(34)** in Kontakt zu gelangen, wobei die genannte vordere Fläche **(48)** der genannten Hülse **(40)** jeweils an Letztere anschlägt, um sie beim Verschrauben mit der genannten Ringmutter **(20)** axial gegen das genannte Gewindeanschlusselement **(T)** zu komprimieren, um die zuvor genannte lokale hydraulische Abdichtung zu erzielen, wobei die genannte rückseitige Fläche **(34)** außerdem geeignet ist, als Anschlag für das Ende **(E)** des Rohrs **(P)** zu dienen.

11. Fitting nach einem beliebigen der vorangegangenen Ansprüche, wobei der genannte dritte Abschnitt **(421)** der genannten Hülse **(40)** mindestens einen Bereich **(4211)** einschließt, der von dem genannten ersten ringförmigen Sitz **(25)** der genannten Ringmutter **(20)** nach dem Verschrauben der genannten Ringmutter **(20)** und des Gewindeanschlusselements **(T)** miteinander vorsteht, um die korrekte Verbindung miteinander anzuzeigen.

## Revendications

1. Raccord pour l'assemblage mutuel d'un élément terminal fileté **(T)** et d'un tuyau à surface lisse **(P)** ayant une extrémité **(E),** comprenant :
- un noyau tubulaire **(10)** définissant un axe **(X)** ayant une portion avant **(11)** qui peut être couplée ou monolithique avec l'élément terminal fileté **(T)** et une portion arrière **(12)** qui peut être insérée dans l'extrémité **(E)** du tuyau **(P)** pour entrer en contact avec la surface intérieure de celui-ci ;
- un écrou circulaire **(20)** qui peut être vissé mutuellement sur ledit élément terminal fileté **(T)** ayant une surface extérieure **(22)** conçue pour être saisie par un utilisateur et une surface intérieure **(21)** conçue pour faire face au tuyau **(P),** ladite surface intérieure **(21)** incluant un premier siège annulaire **(25)** avec une première portion filetée **(251)** qui peut être couplée à l'élément terminal fileté **(T),** une deuxième portion sensiblement tronconique opposée **(252)** et une troisième portion **(253)** interposée
entre celles-ci définissant une première rainure avec une surface **(2531)** perpendiculaire audit axe **(X),** cette dernière et ladite deuxième portion **(252)** définissant une marche **(26)** ;
- un manchon élastique **(40)** qui peut être adapté sur un tuyau **(P)** ayant une surface intérieure **(41)** conçue pour entrer en contact avec la surface extérieure du tuyau **(P)** avec un deuxième siège annulaire sensiblement continu **(45)** ayant un premier diamètre prédéfini (**Ø1**), une surface extérieure **(42)** avec une troisième portion **(421)** faisant face à ladite deuxième portion **(252)** dudit écrou circulaire **(20)** et une quatrième portion sensiblement tronconique **(422)** mutuellement consécutive à la première, une surface avant **(48)** faisant face audit élément terminal fileté **(T)** et au moins une zone plastiquement déformable **(46)** avec une deuxième rainure **(460)** parallèle audit axe **(X)** ;
- un joint élastomère (30) agencé périphériquement par rapport audit noyau tubulaire **(10)** et conçu pour rester interposé entre l'extrémité **(E)** du tuyau **(P),** ledit manchon **(40)** et l'élément terminal fileté **(T)** pour fournir l'étanchéité hydraulique locale ;
dans lequel lors du vissage réciproque dudit écrou circulaire **(20)** et dudit élément terminal fileté **(T),** ladite marche **(26)** est conçue pour toucher mutuellement ladite quatrième portion **(422)** dudit manchon **(40)** dans un seul point de tangence **(PT),** le vissage induisant la translation axiale dudit manchon **(40)** et une compression radiale résultante de celui-ci de façon à ce que :
l'extrémité **(E)** du tuyau **(P)** soit axialement comprimée contre ledit joint élastomère **(30)** de manière à fournir l'étanchéité hydraulique susmentionnée ; et
- ledit deuxième siège annulaire **(45)** est progressivement comprimé de façon radiale le long dudit axe **(X)** de manière à comprimer radialement l'extrémité **(E)** du tuyau **(P)** contre ledit joint élastomère **(30)** de manière à obtenir une première étanchéité mécanique, le deuxième siège annulaire **(45)** ayant - après le vissage - un deuxième diamètre prédéterminé **(Ø2)** au niveau de ladite surface avant **(48)** qui est sensiblement plus petit que ledit diamètre (**Ø1**), ladite zone plastiquement déformable **(46)** se pliant de sorte que ladite surface intérieure **(41)** reste sensiblement continue et sans évidements.

2. Raccord selon la revendication 1, dans lequel - lors du vissage mutuel dudit écrou circulaire **(20)** et dudit élément terminal fileté **(T)** ladite marche **(26)** est conçue pour toucher mutuellement ladite quatrième portion **(422)** dudit manchon **(40)** dans un seul point de tangence **(PT)** de manière à éviter des torsions du tuyau **(P)** non souhaitées.

3. Raccord selon la revendication 1 ou 2, dans lequel ledit manchon **(40)** est constitué d'un premier matériau polymère.

4. Raccord selon l'une ou plusieurs des revendications précédentes, dans lequel ladite troisième portion **(421)** dudit manchon **(40)** est également tronconique, ladite troisième portion **(421)** et ladite quatrième portion **(422)** étant toutes les deux divergentes par rapport audit axe **(X).**

5. Raccord selon la revendication précédente, dans lequel ladite troisième portion **(421)** et ladite quatrième portion **(422)** ont un angle d'incidence différent par rapport audit axe **(X).**

6. Raccord selon la revendication 4 ou 5, dans lequel, après le vissage mutuel dudit écrou circulaire **(20)** et dudit élément terminal fileté **(T),** ladite deuxième portion sensiblement tronconique **(252)** dudit écrou circulaire **(20)** et ladite troisième portion **(421)** dudit manchon **(40)** sont sensiblement parallèles.

7. Raccord selon l'une quelconque des revendications précédentes, dans lequel ladite rainure **(460)** comprend une paire de surfaces longitudinales **(461, 462)** faisant face l'une à l'autre et parallèles audit axe **(X)** et une surface inférieure **(463)** interposée entre celles-ci et concentrique par rapport audit siège annulaire **(45),** la surface inférieure **(463)** étant pliable extérieurement lors du vissage mutuel dudit écrou circulaire **(20)** et dudit élément terminal fileté **(T)** de manière à rester latéralement délimitée par ladite paire de surfaces longitudinales **(461, 462)** de sorte que la surface intérieure **(41)** reste sensiblement continue et sans évidements.

8. Raccord selon l'une quelconque des revendications précédentes, dans lequel ledit noyau tubulaire **(10)** est constitué d'un matériau métallique ou d'un deuxième matériau polymère ayant un degré de dureté sensiblement supérieur au degré de dureté du tuyau **(P).**

9. Raccord selon l'une quelconque des revendications précédentes, dans lequel ladite surface intérieure **(41)** dudit manchon **(40)** entoure le tuyau **(P)** sans créer de frottements avec celui-ci lors de la rotation mutuelle dudit écrou circulaire **(20)** et dudit élément terminal fileté **(T),** la surface intérieure **(41)** dudit manchon **(40)** ayant une pluralité de nervures annulaires biseautées **(411).**

10. Raccord selon l'une quelconque des revendications précédentes, dans lequel ledit joint élastomère **(30)** a une première portion tubulaire **(31)** couplée coaxialement audit noyau tubulaire **(10)** et une deuxième portion en forme de bride **(32)** ayant une face avant **(33)** susceptible d'entrer en contact avec l'élément terminal fileté **(T)** et une face arrière **(34),** ladite surface avant **(48)** dudit manchon **(40)** touchant mutuellement cette dernière pour la comprimer axialement contre ledit élément terminal fileté **(T)** lors du vissage mutuel avec ledit écrou circulaire **(20),** de manière à obtenir l'étanchéité hydraulique locale susmentionnée, ladite face arrière **(34)** étant en outre susceptible d'agir en tant que butée pour l'extrémité **(E)** du tuyau **(P).**

11. Raccord selon l'une quelconque des revendications précédentes, dans lequel ladite troisième portion **(421)** dudit manchon **(40)** comprend au moins une zone **(4211)** faisant saillie à partir dudit premier siège annulaire **(25)** dudit écrou circulaire **(20)** après le vissage mutuel dudit écrou circulaire **(20)** et de l'élément terminal fileté **(T),** de manière à indiquer la connexion mutuelle correcte.
